# EUROPÄISCHE PATENTSCHRIFT

(11) **EP 0 748 713 B1**
(45) Veröffentlichungstag und Bekanntmachung des Hinweises auf die Patenterteilung: **04.12.2002**
(21) Anmeldenummer: 96109384.6
(22) Anmeldetag: 12.06.1996
(51) Int. Cl.: B60K 26/02, F16H 59/20

(54) **Fahrpedaleinrichtung**
Accelerator pedal installation
Installation avec pédale d'accélération

(30) Priorität: 16.06.1995 DE 19521821
(43) Veröffentlichungstag der Anmeldung: 18.12.1996
(73) Patentinhaber: Hella KG Hueck & Co., 59552 Lippstadt (DE)
(72) Erfinder: Berglar, Heinrich, 59510 Lippetal (DE)

(56) Entgegenhaltungen:
- DE-C- 4 407 005

## Beschreibung

Die Erfindung betrifft eine Fahrpedaleinrichtung zum Einstellen der Fahrgeschwindigkeit eines Fahrzeuges, mit einer Fahrpedalplatte, mit mindestens einer Feder, die als Schraubendruckfeder ausgebildet ist, die eine Rückstellkraft auf die Fahrpedalplatte ausübt, mit zumindest einem Sensor, der ein von der Betätigung der Fahrpedalplatte abhängiges Signal erzeugt, wobei der Sensor die Positionierung eines drehbaren Elementes erfaßt (Drehsensor), und einem Reibelement zur Erzeugung einer Krafthysterese bei Betätigung der Fahrpedalplatte, das durch die Schraubendruckfeder beaufschlagt ist, wobei ein mit der Fahrpedalplatte gekoppelter, drehbar gelagerter Hebel vorgesehen ist, der die Betätigungswelle des Drehsensors antreibt und wobei der Hebel eine Ausnehmung aufweist, die eine abgeschrägte Innenfläche besitzt, an der eine keilförmige Außenfläche des Reibelementes verschieblich anliegt, wobei die der keilförmigen Außenfläche gegenüberliegende Außenfläche des Reibelementes an einer Gehäusewandung oder einer auf einer Gehäusewandung aufgebrachten Reibfläche anliegt und wobei das Gerätegehäuse der Fahrpedaleinrichtung im Inneren eine Einschubeinrichtung zur Aufnahme eines Kick-down-Elementes aufweist.

Eine derartige Fahrpedaleinrichtung ist aus der DE-C-44 07 005 vorbekannt und hat unter anderem den Vorteil, neben einem konstruktiv besonders einfachen Aufbau besonders gute Betriebs- und Notbetriebseigenschaften aufzuweisen.

In Anspruch 8 sowie im drittletzten und vorletzten Absatz der Beschreibung der DE-C-44 07 005 wird bereits angedeutet, daß es für Fahrzeuge mit automatischem Getriebe sinnvoll erscheint, der Fahrpedaleinrichtung ein Kick-down-Element hinzuzufügen, so daß der Fahrer anhand der Kraftcharakteristik des Fahrpedals das Erreichen der Kick-down-Stellung der Fahrpedalplatte erkennen kann.

Hierzu wird vorgeschlagen, daß das Gerätegehäuse der Fahrpedaleinrichtung eine geeignete Einschubvorrichtung zur Aufnahme eines Kick-down-Elementes aufweisen soll.

Der DE-C-44 07 005 ist allerdings nicht zu entnehmen, wie ein solches Kick-down-Element besonders einfach und dabei konstruktiv und funktionell vorteilhaft ausgestaltet sein kann. Es ist daher die Aufgabe der Erfindung für ein Fahrpedal eine Kick-down-Einrichtung zu schaffen, welche besonders einfach und kostengünstig aufgebaut ist und das zudem eine vorteilhafte und durch konstruktive Maßnahmen leicht zu variierende Kraft-Weg-Charakteristik aufweist.

Diese Aufgabe wird erfindungsgemäß dadurch gelöst, daß der Hebel eine Nase aufweist, welche in einem vorgegebenen Kick-down-Bereich des Hebels die Schenkel einer im wesentlichen ein U-Profil aufweisenden Blattfeder auseinanderdrückt.

Eine solche erfindungsgemäße Fahrpedaleinrichtung ist konstruktiv besonders einfach und kostengünstig realisierbar. Hierzu ist lediglich an den Hebel in Bewegungsrichtung eine Nase, insbesondere einstückig, anzuformen, welche in der vorgesehenen Kick-down-Position die Schenkel einer starken Blattfeder auseinanderdrückt.

Besonders vorteilhaft ist auch, ein Verbindungselement vorzusehen, welches die Endabschnitte zweier Rollen beweglich lagert und wobei Teilabschnitte der Mantelflächen der Rollen auf der Innenseite der Blattfeder anliegen, so daß die Blattfeder gehalten wird. Das so zusammengesetzte Kick-down-Element ist dabei besonders einfach montierbar. Die Kraftübertragung von der Nase zur Blattfeder geschieht hierbei über die Rollen, über welche Teilflächen der Nase abrollen können.

Das Kick-down-Element besteht somit sogar in einer besonders vorteilhaften Ausführungsform aus lediglich drei unterschiedlichen Teilen, nämlich der Blattfeder, den Rollen und dem Verbindungselement. Das Verbindungselement erlaubt zudem auf einfache Weise das Kick-down-Element in eine auf der Gehäuseinnenfläche angeformten Einschubeinrichtung einzufügen. Hierbei ist besonders vorteilhaft, daß das Kick-down-Element bei Fahrpedaleinrichtungen für Fahrzeuge mit einem automatischen Getriebe einfach zusätzlich eingefügt werden kann und für Fahrzeuge mit einem manuell betätigten Schaltgetriebe einfach fortgelassen werden kann, ohne daß weitere konstruktive Änderungen an der erfindungsgemäßen Fahrpedaleinrichtung erforderlich wären.

Die Kraft-Weg-Charakteristik kann auf einfache Weise durch Formgebung der Nase vorgegeben werden. Besonders vorteilhaft ist hierbei, im vorderen Bereich der Nase konkave und konvexe kreisbogenförmig abgerundete Bereiche vorzusehen, auf welcher die Rollen beim Eintauchen der Nase in das Kick-down-Element abrollen können, um einen Materialverschleiß an der Nase vorzubeugen.

Ein Ausführungsbeispiel einer erfindungsgemäßen Fahrpedaleinrichtung ist in der Zeichnung dargestellt und soll im folgenden anhand der Zeichnung näher erläutert werden.

Es zeigen
- Figur 1: eine Schnittzeichnung einer erfindungsgemäßen Fahrpedaleinrichtung;
- Figur 2: die Kraft-Weg-Charakteristik einer erfindungsgemäßen Fahrpedaleinrichtung.

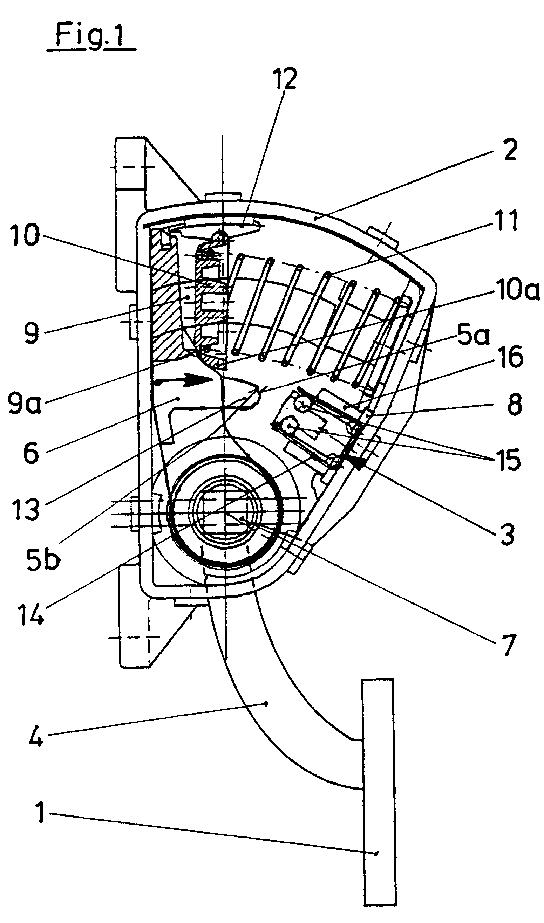

Die Figur 1 zeigt einen Schnitt durch eine erfindungsgemäße Fahrpedaleinrichtung. Zu erkennen ist der als Vierkant ausgeführte Endabschnitt einer Betätigungswelle (7). Mit diesem Endabschnitt verbunden ist eine Betätigungsstange (4), welche eine Fahrpedalplatte (1) aufweist oder mit einer Fahrpedalplatte in Verbindung steht.

Ein Hebel (6) steht in fester Verbindung mit der Betätigungswelle (7), die gleichzeitig auch die Betätigungswelle eines (in der Zeichnung nicht dargestellten) Drehsensors ausbildet oder zumindest an diese angekoppelt ist.

Der Hebel (6) besitzt in seinem dem Drehpunkt der Betätigungswelle (7) gegenüberliegenden Abschnitt eine Ausnehmung (9), welche wiederum eine abgeschrägte Innenfläche (9a) aufweist.

Auf dieser Innenfläche (9a) liegt eine keilförmig ausgebildete Außenfläche (10a) eines Reibelementes (10) verschieblich an, welches durch (mindestens) eine Schraubendruckfeder (11) in Richtung auf die Ausnehmung (9) des Hebels (6) gedrückt wird.

Die der keilförmigen Außenfläche (10a) entgegengesetzt liegende Fläche des Reibelementes (10) wirkt mit einer an einer Innenfläche des Gehäuses (2) aufgebrachten Reibfläche (12) zusammen.

Die so ausgestaltete Fahrpedaleinrichtung funktioniert folgendermaßen: Betätigt der Fahrer die Fahrpedalplatte (1) in Richtung auf das Gehäuse (2), so überträgt die Betätigungsstange (4) die Bewegung der Fahrpedalplatte (1) auf die Betätigungswelle (7), die dem mit ihr verbundenen Hebel (6) im Uhrzeigersinn dreht. Diese Drehbewegung der Betätigungswelle (7) betätigt einen nicht dargestellten Drehsensor. Gleichzeitig wird die (mindestens eine Schraubendruckfeder (11), welche die Rückstellkraft für Hebel (6) und Fahrpedalplatte (1) erzeugt, zusammengedrückt. Hierbei wirkt nun die Federkraft der mindestens einen Schraubendruckfeder (11) auf das Reibelement (10) in Richtung auf die Ausnehmung (9) des Hebels (6), wobei die keilförmige Außenfläche (10a) des Reibelementes (10) sich an der schrägen Innenfläche (9a) der Ausnehmung (9) entlangschiebt.

Hierdurch entsteht eine zur Drehbewegung des Hebels (6) radial gerichtete Kraft, mit der das Reibelement (10) auf die auf der Innenfläche des Gehäuses (2) aufgebrachte Reibfläche (12) gepreßt wird. Hierdurch wird auf einfache Weise und durch die gleichen konstruktiven Elemente bei Betätigung der Fahrpedalplatte (1) sowohl die Rückstellkraft als auch die erwünschte Reibungskraft erzeugt. Durch geeignete Ausgestaltung der die Reibungskraft erzeugenden Bauteile (10, 11, 12) kann zudem auf einfache Weise eine Krafthysterese für die Reibungskraft vorgegeben werden.

Bei Fahrzeugen mit einem automatischen Getriebe ist es darüber hinaus wünschenswert, daß der Fahrer deutlich den sogenannten Kick-down-Bereich erkennt, und zwar zum Beispiel dadurch, daß die zur Betätigung des Fahrpedals nötige Kraft zum Beginn des Kick-down-Bereiches deutlich ansteigt.

Um der Kraft-Weg-Charakteristik der bis hierher beschriebenen Fahrpedaleinrichtung eine solche "Kick-down-Charakteristik" hinzuzufügen, wird bei der erfindungsgemäßen Fahrpedaleinrichtung vorgesehen, daß an den Hebel (6) eine Nase (13) angeformt ist, welche in der Kick-down-Position eine ein U-förmiges Profil aufweisende Blattfeder (14) auseinanderdrückt, wodurch in diesem Bereich zur Betätigung des Fahrpedals ein erhöhter Kraftaufwand benötigt wird. Die Blattfeder (14) ist hierbei Teil des sogenannten Kick-down-Elementes (3), welches zusammengesetzt ist aus der Blattfeder (14) und einem Verbindungselement (16), welches zwei Rollen (15), die mit ihren Mantelflächen an der Innenseite der Blattfeder (14) anliegen, so lagert, daß diese zum einen drehbar und zum anderen in Richtung auf die Schenkel der Blattfeder (14) hin verschieblich gelagert sind.

Das Verbindungselement (16) ist in eine schwalbenschwanzartige Einschubvorrichtung (8) auf der Innenseite des Gerätegehäuses (2) eingeschoben.

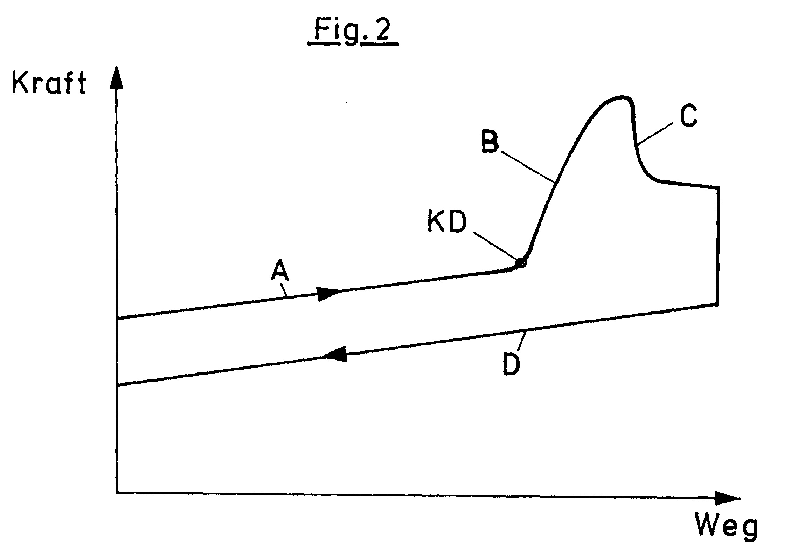

Die Kraft-Weg-Charakteristik einer erfindungsgemäßen Fahrpedaleinrichtung mit einem Kick-down-Element ist in der Figur 2 dargestellt und soll im folgenden unter Bezugnahme auf die in der Figur 1 dargestellten konstruktiven Merkmale näher erläutert werden.

Der obere Ast des Graphen zeigt die Kraft-Weg-Charakteristik der Fahrpedaleinrichtung beim Niederdrücken des Fahrpedals (1). Durch die Wirkung der Schraubenfeder (11) steigt die Kraft bis zum Kick-down-Punkt (KD) linear an (Bereich A), um dann steil anzusteigen (B) und im weiteren Bereich (C) etwas abzufallen.

Die Kraft-Weg-Charakteristik jenseits des Kick-down-Punktes (KD) hängt dabei neben den Eigenschaften der Blattfeder (14) auch von der Formgebung der Nase (13) ab und kann durch Veränderung dieser Formgebung leicht beeinflußt werden.

Um einen möglichst gleichmäßigen Übergang vom linearen Bereich (A) zum stark ansteigenden Kick-down-Bereich (B) zu erhalten, ist der vordere Abschnitt der Nase (13) stark verjüngt und besitzt konkave und konvexe kreisbogenförmig abgerundete Bereiche (5a, 5b). Der stark ansteigenden Abschnitt (B) entspricht einer Bewegung des Hebels (6), bei welchem der Abschnitt der Nase (13) mit einem stark ansteigenden Querschnitt die Rollen (15) und damit die Blattfeder (14) des Kick-down-Elementes (3) auseinanderdrückt. In dem abflachenden Abschnitt (C) verändert sich der in das Kick-down-Element (3) eingeführte Querschnitt der Nase (13) zu kleineren Werten hin. Der Abstand zwischen den linearen Bereichen (A, D) beim Betätigen und beim Zurücknehmen des Fahrpedales (1) ergibt sich durch die Hysteresewirkung des Reibelementes (10).

Die Fahrpedaleinrichtung mit dem erfindungsgemäß ausgestalteten Kick-down-Element (3) zeichnet sich also durch einen besonders einfachen Aufbau und durch eine besonders vorteilhafte und zudem leicht vorgebbare Kraft-Weg-Charakteristik aus.

### Bezugszeichenliste

### Fahrpedaleinrichtung

- 1: Fahrpedalplatte
- 2: Gerätegehäuse
- 3: Kick-down-Element
- 4: Betätigungsstange
- 5a: konkaver kreisbogenförmig abgerundeter Bereich
- 5b: konvexer kreisbogenförmig abgerundeter Bereich
- 6: Hebel
- 7: Betätigungswelle
- 8: Einschubeinrichtung
- 9: Ausnehmung (in Hebel (6))
- 9a: abgeschrägte Innenfläche (der Ausnehmung 9))
- 10: Reibelement
- 10a: keilförmige Außenfläche
- 11: Schraubendruckfeder (n)
- 12: Reibfläche
- 13: Nase
- 14: Blattfeder
- 15: Rollen
- 16: Verbindungselement
- A, B, C, D: Abschnitt im Kraft-Weg-Diagramm
- KD: Kick-down-Punkt (Anfang des Kick-down-Bereiches B)

## Patentansprüche

1. Fahrpedaleinrichtung zum Einstellen der Fahrgeschwindigkeit eines Fahrzeuges, mit einer Fahrpedalplatte (1), mit mindestens einer Feder (11), die als Schraubendruckfeder ausgebildet ist, die eine Rückstellkraft auf die Fahrpedalplatte (1) ausübt, mit zumindest einem Sensor, der ein von der Betätigung der Fahrpedalplatte (1) abhängiges Signal erzeugt, wobei der Sensor die Positionierung eines drehbaren Elementes erfaßt, und einem Reibelement (10) zur Erzeugung einer Krafthysterese bei Betätigung der Fahrpedalplatte (1), das durch die Schraubendruckfeder (11) beaufschlagt ist, wobei ein mit der Fahrpedalplatte (1) gekoppelter, drehbar gelagerter Hebel (6) vorgesehen ist, der die Betätigungswelle (7) des Drehsensors antreibt und wobei der Hebel (6) eine Ausnehmung (9) aufweist, die eine abgeschrägte Innenfläche (9a) besitzt, an der eine keilförmige Außenfläche (10a) des Reibelementes (10) verschieblich anliegt, wobei die der keilförmigen Außenfläche (10a) gegenüberliegende Außenfläche des Reibelementes (10) an einer Gehäusewandung oder einer auf einer Gehäusewandung aufgebrachten Reibfläche (12) anliegt und wobei das Gerätegehäuse (2) der Fahrpedaleinrichtung im Inneren eine Einschubeinrichtung (8) zur Aufnahme eines Kick-down-Elementes (3) aufweist, **dadurch gekennzeichnet, daß** der Hebel (6) eine Nase (13) aufweist, welche in einem vorgegebenen Kick-down-Bereich des Hebels (6) die Schenkel einer im wesentlichen ein U-Profil aufweisenden Blattfeder (14) auseinanderdrückt.

2. Fahrpedaleinrichtung nach Anspruch 1, **dadurch gekennzeichnet, daß** das Kick-down-Element (3) ein Verbindungselement (16) aufweist, welches die Endabschnitte zweier Rollen (15) beweglich lagert, und daß Teilabschnitte der Mantelflächen der Rollen (15) an der Innenseite der Blattfeder (14) anliegen.

3. Fahrpedaleinrichtung nach Anspruch 1, **dadurch gekennzeichnet, daß** die Nase (13) im vorderen Bereich konkave und konvexe kreisbogenförmig abgerundete Bereiche (5a, 5b) aufweist.

## Claims

1. An accelerator pedal device for controlling the driving speed of a vehicle, comprising an accelerator pedal plate (1), at least one spring (11) taking the form of a helical compression spring and exerting a restoring force on the accelerator pedal plate (1), at least one sensor, which generates a signal dependent on operation of the accelerator pedal plate (1) and detects the positioning of a rotary element, and a friction element (10) for producing a force hysteresis on operation of the accelerator pedal plate (1), said friction element (10) being acted upon by the helical compression spring (11),
in which a pivot-mounted lever (6), coupled with the accelerator pedal plate (1), is provided which drives the operating shaft (7) of the rotary sensor, and the lever (6) has a recess (9), which has a chamfered inner face (9a), against which a wedge-shaped outer face (10a) of the friction element (10) rests so as to be displaceable, the outer face of the friction element (10) which is disposed opposite the wedge-shaped outer face (10a) resting against a housing wall or against a friction area (12) provided on the housing wall, and the housing (2) of the accelerator pedal device having on the inside a slide-in unit (8) for mounting a kick-down element (3), **characterized in that** the lever (6) has a lug (13) which, in a predetermined kick-down area of the lever (6), forces apart the sides of a leaf spring (14) which is substantially U-shaped in profile.

2. An accelerator pedal device according to Claim 1, **characterized in that** the kick-down element (3) has a connecting element (16) which flexibly carries the end portions of two rollers (15), and **in that** parts of the outer faces of the rollers (15) rest against the inside of the leaf spring (14).

3. An accelerator pedal device according to Claim 1, **characterized in that**, in its front area, the lug (13) has concave and convex areas (5a, 5b) which are rounded in the form of a circular arc.

## Revendications

1. Dispositif à pédale d'accélérateur pour régler la vitesse de circulation d'un véhicule, comportant un plateau de pédale d'accélérateur (1), au moins un ressort (11) réalisé sous forme de ressort de compression hélicoïdal et exerçant une force de rappel sur le plateau de pédale d'accélérateur (1), comportant au moins un détecteur qui génère un signal dépendant de l'actionnement du plateau de pédale d'accélérateur (1), le détecteur détectant le positionnement d'un élément tournant, et comportant un élément de friction (10) pour générer une hystérésis de force lors de l'actionnement du plateau de pédale d'accélérateur (1), élément qui est sollicité par le ressort de compression hélicoïdal (11), dans lequel est prévu un levier (6) monté mobile en rotation et accouplé au plateau de pédale d'accélérateur (1), levier (6) qui entraîne l'arbre d'actionnement (7) du détecteur de rotation et qui présente un évidement (9) qui possède une surface intérieure oblique (9a) contre laquelle s'applique de façon mobile en translation une surface extérieure (10a) en forme de coin de l'élément de friction (10), la surface extérieure de l'élément de friction (10) opposée à la surface extérieure (10a) en forme de coin s'appliquant contre une paroi de boîtier ou contre une surface de friction (12) déposée sur une paroi de boîtier, et le boîtier d'appareil (2) du dispositif à pédale d'accélérateur présentant dans son volume intérieur un dispositif d'introduction (8) pour recevoir un élément de kick-down (3), **caractérisé en ce que** le levier (6) présente un bec (3) qui, dans une zone de kick-down prédéterminée du levier (6), écarte les branches d'un ressort à lame (14) présentant sensiblement un profil en U.

2. Dispositif à pédale d'accélérateur selon la revendication 1, **caractérisé en ce que** l'élément de kick-down (3) comprend un élément de liaison (16) qui supporte de façon mobile les tronçons d'extrémité de deux rouleaux (15), et **en ce que** des tronçons partiels des surfaces enveloppes des rouleaux (15) s'appliquent contre la face intérieure du ressort à lame (14).

3. Dispositif à pédale d'accélérateur selon la revendication 1, **caractérisé en ce que** le bec (13) présente dans la région antérieure des zones (5a, 5b) concave et convexe arrondies en forme d'arc de cercle.
